# EUROPEAN PATENT SPECIFICATION

(11) **EP 3 547 514 B1**
(45) Date of publication and mention of the grant of the patent: **12.07.2023**
(21) Application number: 16922533.1
(22) Date of filing: 25.11.2016
(51) Int. Cl.: H02P 29/024, G01H 1/00, H02P 29/50, H02M 1/00, G01H 17/00, G01M 99/00, H02M 7/48, H02M 1/32, H02M 7/5387

(54) **POWER CONVERSION DEVICE**
STROMWANDLUNGSVORRICHTUNG
DISPOSITIF DE CONVERSION DE PUISSANCE

(43) Date of publication of application: 02.10.2019
(73) Proprietor: Hitachi, Ltd., Tokyo 100-8280 (JP)
(72) Inventor: SAKURAI, Naoki, Tokyo 100-8280 (JP)
(74) Representative: Mewburn Ellis LLP
(86) International application number: PCT/JP2016/084881
(87) International publication number: WO 2018/096640

(56) References cited:
- EP-A2- 2 650 667
- WO-A1-00/04359
- JP-A- S54 147 882
- JP-A- S62 195 891
- JP-A- 2004 279 322
- JP-A- 2011 191 181
- JP-A- 2013 223 243
- JP-B2- H0 145 011

## Description

### Technical Field

The present invention relates to a power conversion device such as an inverter, and more particularly to a power conversion device that diagnoses abnormality of a motor or a machine driven by the motor.

### Background Art

Many parts that will be worn out, such as bearings, are used for a motor and a machine driven by the motor. Conventionally, periodic inspection is performed to check whether there is abnormality, but there are many steps for the work such as disassembly, leading to expensive maintenance. Moreover, when a mechanical section is incorporated in the device and cannot be easily disassembled, it is necessary to periodically replace part of the device such as a belt or the entire device, which is expensive. Furthermore, there are also many machines used for 20 years or more, such as railroads, automobiles, building air conditioning and elevators, and high reliability is also required.

Therefore, the constitution has been proposed in which abnormality is detected without disassembling the motor and the machine driven by the motor.

PTL 1 describes a method of diagnosing abnormality of a motor or a machine driven by the motor, in which a vibration sensor is attached to the motor or the machine driven by the motor, and the abnormality is diagnosed based on a detection signal of vibration by the sensor when the motor inertially rotates within a predetermined rotational speed region.

Moreover, PTL 2 describes that an acoustic sensor, which is less expensive than a vibration sensor, is used. That is, described is a method of diagnosing abnormality of a motor or a machine driven by the motor, in which the acoustic sensor is attached to the motor or the machine driven by the motor, and the abnormality is diagnosed from a signal of the acoustic sensor. EP 2 650 667 A2 proposes an apparatus for alarming an inverter status, where the motor status is analyzed by recognizing vibrations of the motor. WO 00/04359 proposes detecting abnormalities in a motor by continuously computing a power spectrum of a monitored sound.

### Citation List

### Patent Literature

PTL 1: JP 4581693 B2
PTL 2: JP H1-45011 A

### Summary of Invention

### Technical Problem

Both PTLs 1 and 2 have a problem that the sensor comes off from the motor or the machine driven by the motor with time since the sensor is attached to the motor or the machine driven by the motor. They also have a problem with the detection accuracy of abnormality.

An object of the present invention is to solve the above problems and provide a power conversion device that diagnoses abnormality of a motor or a machine driven by the motor with high reliability and high accuracy.

### Solution to Problem

The present invention is a power conversion device according to claim 1. The device including: an acoustic sensor; an interface unit configured to input a sound pressure signal acquired by the acoustic sensor when a motor is driven, and to receive motor rotation information; an accumulation unit configured to accumulate the sound pressure signal and the motor rotation information from the interface unit; an abnormality detection unit configured to detect abnormality based on a relationship between the sound pressure signal and the motor rotation information; and an external output unit configured to output the abnormality when the abnormality is detected by the abnormality detection unit.

### Advantageous Effects of Invention

According to the present invention, it is possible to output the detected abnormality to the outside without installing a sensor in a motor or a machine driven by the motor and eliminate a possibility that a sensor comes off from the motor or the machine driven by the motor with time when the sensor is directly attached to the motor or the machine driven by the motor.

It is also possible to improve accuracy by detecting abnormality from the relationships among the torque of the power conversion device, the motor rotation speed and the sound pressure acquired by the acoustic sensor.

### Brief Description of Drawings

[FIG. 1] FIG. 1 is a diagram showing a first embodiment according to the present invention.
[FIG. 2] FIG. 2 is a flowchart for explaining the operation of the first embodiment according to the present invention.
[FIG. 3] FIG. 3 is a diagram for explaining a method of detecting abnormality from a time-dependent change in the relationship between the motor torque and the sound pressure in the present invention.
[FIG. 4] FIG. 4 is a diagram showing a second embodiment according to the present invention.
[FIG. 5] FIG. 5 is a flowchart for explaining the operation of the second embodiment according to the present invention.
[FIG. 6] FIG. 6 is a diagram for explaining a first method of detecting abnormality from a time-dependent change in the relationship between the motor rotation speed and the sound frequency acquired by the acoustic sensor in the present invention.
[FIG. 7] FIG. 7 is a diagram for explaining a second method of detecting abnormality from a time-dependent change in the relationship between the time and the sound frequency acquired by the acoustic sensor in the present invention.
[FIG. 8] FIG. 8 is a diagram showing a third embodiment according to the present invention.
[FIG. 9] FIG. 9 is a diagram showing a fourth embodiment according to the present invention.
[FIG. 10] FIG. 10 is a diagram showing a fifth embodiment according to the present invention.
[FIG. 11] FIG. 11 is a diagram showing a driving circuit for driving a three-phase permanent magnet motor.
[FIG. 12] FIG. 12 is a diagram showing an example not according to the invention.

### Description of Embodiments

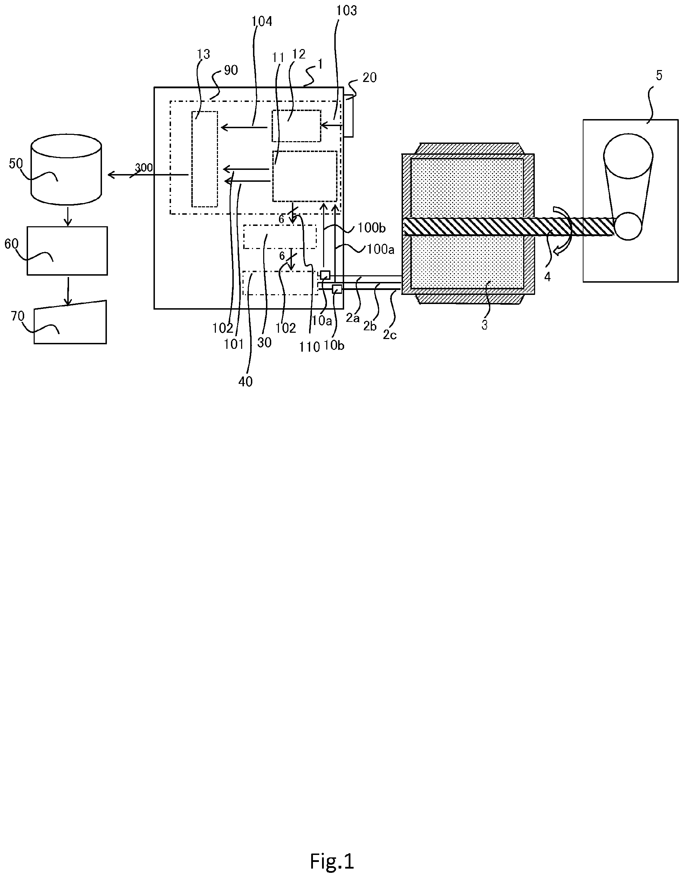

FIG. 1 shows a first embodiment according to the present invention. A power conversion device (inverter) 1 is electrically connected to a motor 3 by three-phase motor lines 2a, 2b and 2c. The motor drives a machine 5 having a rotor through a motor rotating shaft 4. The motor wire 2a is provided with a current sensor 10a that measures a motor driving current. Moreover, the motor wire 2c is provided with a current sensor 10b that measures the motor driving current. Based on current sensor signals 100a and 100b and a torque command and a motor rotation speed instructed from the outside, an arithmetic section 11 provided in a microcomputer 90 generates a driving command 110 for an IGBT. The driving command 101 from the microcomputer 90 is amplified by a gate driving circuit 30 to control the IGBT 40 to be on or off, thereby controlling the motor current to drive the motor with the torque command and the motor rotation speed from the outside.

In the present invention, an acoustic sensor 20 is provided outside the inverter 1 and measures the sound of the motor or the machine driven by the motor. A signal 103 measured by the acoustic sensor 20 is converted from an analog signal into a digital signal 104 by an analog-to-digital converter (A/D converter) 12. The digitized signal 104 of the acoustic sensor 20, a torque command 102, and motor rotation speed information 101 are accumulated in a data accumulation means 50 outside the microcomputer 90 through an interface circuit 13. A time-dependent change is detected by an abnormality detection device 60 from the accumulated data in the data accumulation means 50, and an operator is notified of abnormality through an external output unit 70 when the abnormality is detected.

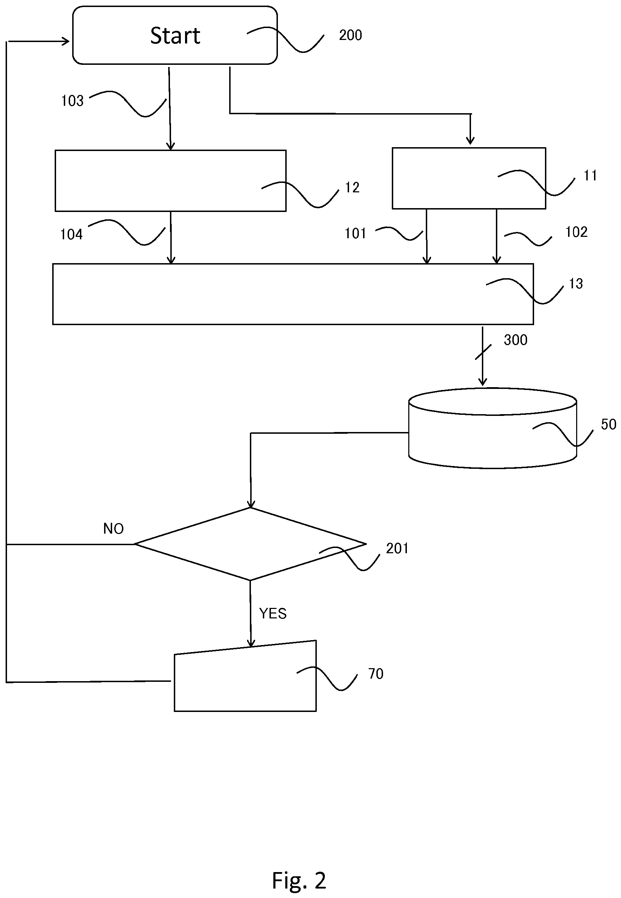

Furthermore, the operation of the first embodiment according to the present invention will be described in detail by using the flowchart in FIG. 2. When a power converter starts operation (200), the present invention also starts operation. The analog information 103 by the acoustic sensor is converted into the digital signal 104 by the analog-to-digital converter (A/D converter) 12 and inputted into the interface circuit 203. The torque command 102 and the motor rotation speed information 101 are inputted into the interface circuit 13 from the arithmetic section 11. A signal is sent from the interface circuit 13 to the data accumulation means 50, and the data is accumulated in the data accumulation means 50. When the abnormality detection device 60 judges abnormality from the time-dependent change in the data in the data accumulation means 50 by a determination means 201, the operator is notified of the abnormality through the external output unit 70. In order to grasp the time-dependent change, a time measurement unit may be provided although not shown, or time information may be acquired from the outside.

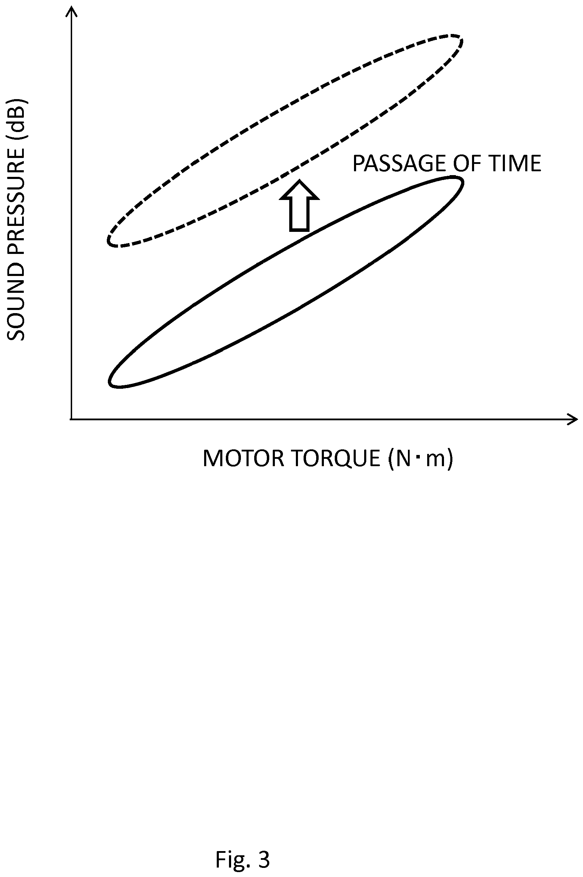

A method of detecting abnormality from a time-dependent change in the relationship between the motor torque and the sound pressure will be described with FIG. 3. With respect to the motor torque, the sound pressure increases in proportion to the motor torque during normal operation. However, when the motor rotation speed resonates with the eigenvalue frequency of the machine driven by the motor, the sound pressure increases. Thus, the relationship between the motor torque and the sound pressure is distributed in a certain range as shown in FIG. 3. Abnormality is detected by catching the time-dependent change in this relationship.

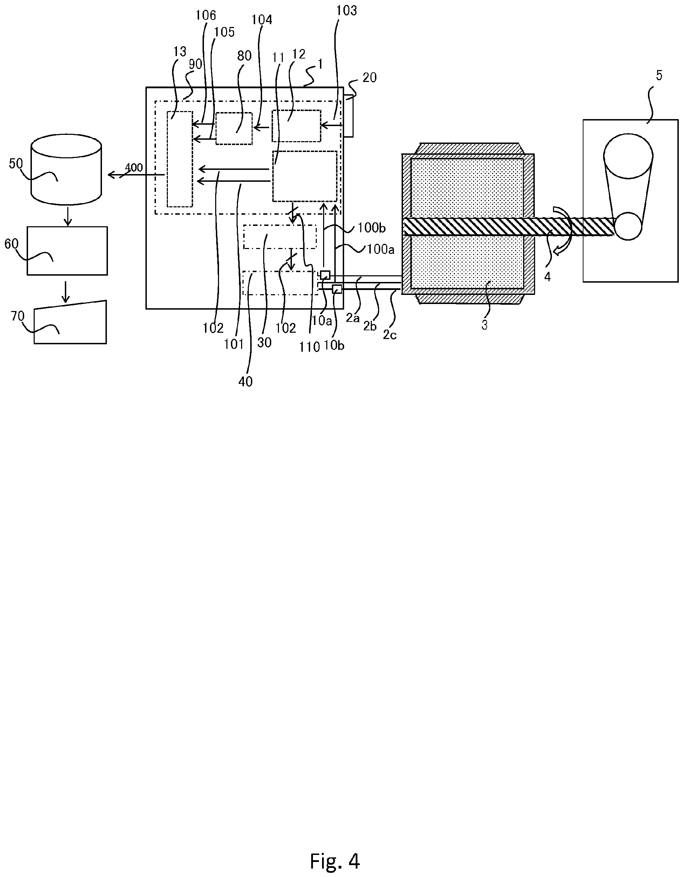

FIG. 4 shows a second embodiment according to the present invention. A frequency signal 105 and a sound pressure signal 106 are further generated by a fast Fourier transform (FFT) converter 80 from a signal, which is obtained by converting a signal 103 measured by a sensor 20 into a digital signal 104 from the analog signal 103 by an analog-to-digital converter (A/D converter) in the first embodiment, and a data accumulation means 50 accumulates the frequency signal 105, the sound pressure signal 106, a torque command 102 and motor rotation speed information 101 through an interface circuit 13.

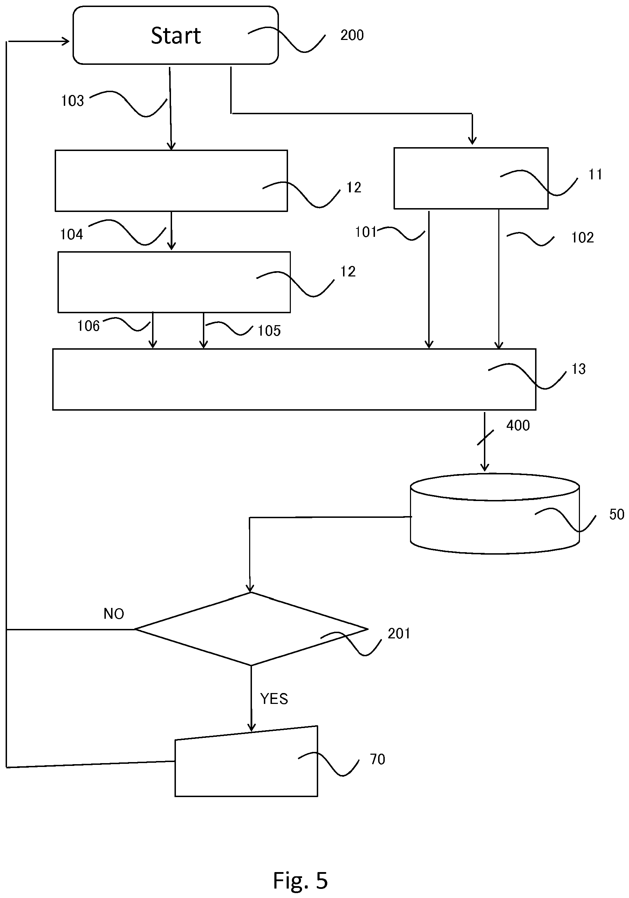

Furthermore, the operation of the second embodiment according to the present invention will be described in detail by using the flowchart in FIG. 5. When a power converter starts operation (200), the present invention also starts operation. The analog information 103 by the acoustic sensor is converted into the digital signal 104 by the analog-to-digital converter (A/D converter) 12, and the frequency signal 105 and the sound pressure signal 106 are further generated by the fast Fourier transform (FFT) converter 80. The frequency signal 105 and the sound pressure signal 106 are inputted into the interface circuit 203. The torque command 102 and the motor rotation speed information 101 are inputted into the interface circuit 13 from the arithmetic section 11. A signal is sent from the interface circuit 13 to the data accumulation means 50, and the data is accumulated in the data accumulation means 50. When an abnormality detection device 60 judges abnormality from a time-dependent change in the data in the data accumulation means 50 by a determination means 201, the operator is notified of the abnormality through an external output unit 70.

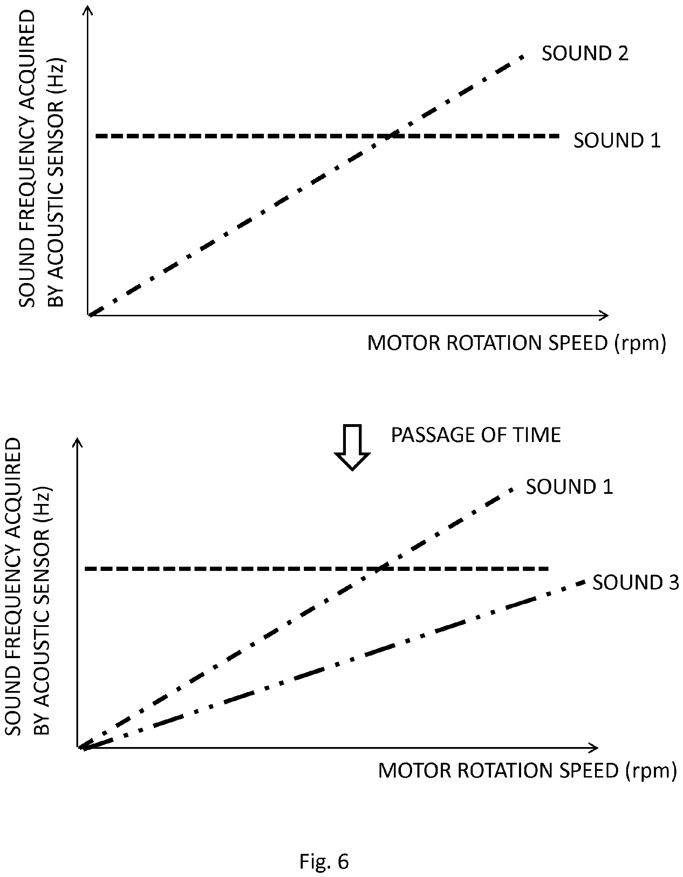

A method of detecting abnormality from the time-dependent change in the relationship between the motor rotation speed and the sound frequency acquired by the acoustic sensor will be described with FIG. 6. The sound is roughly classified into two types with the motor rotation speed as the horizontal axis and the sound frequency acquired by the acoustic sensor as the vertical axis. One is a sound that does not depend on the motor rotation speed and corresponds to the natural vibration frequency of the motor or the machine driven by the motor. The other is a sound proportional to the motor rotation speed. When the motor or a rotor such as a bearing of the machine driven by the motor is damaged, a new sound (sound 3) proportional to the motor rotation speed is generated. By using this sound, the abnormality detection device 60 can detect abnormality.

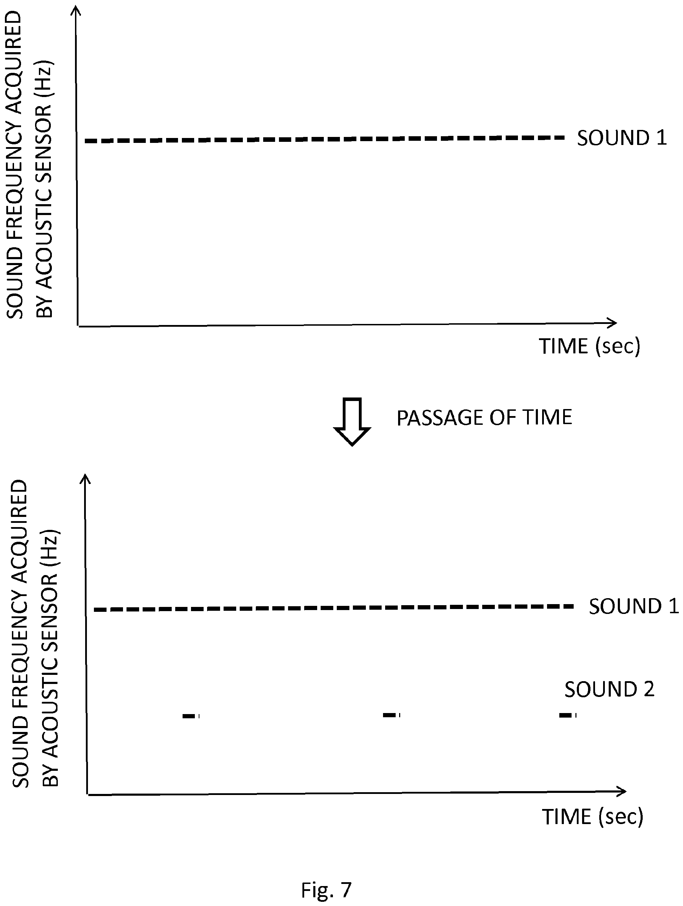

A method of detecting abnormality from the time-dependent change in the relationship between the time and the sound frequency acquired by the acoustic sensor will be described with FIG. 7. The time is the horizontal axis, and the sound frequency acquired by the acoustic sensor is the vertical axis. When the motor 3 or the rotor such as a bearing of the machine driven by the motor is damaged and comes into contact with a specific sliding portion, abnormality can be detected by measuring the sound generated at a specific frequency interval with the detection device 60.

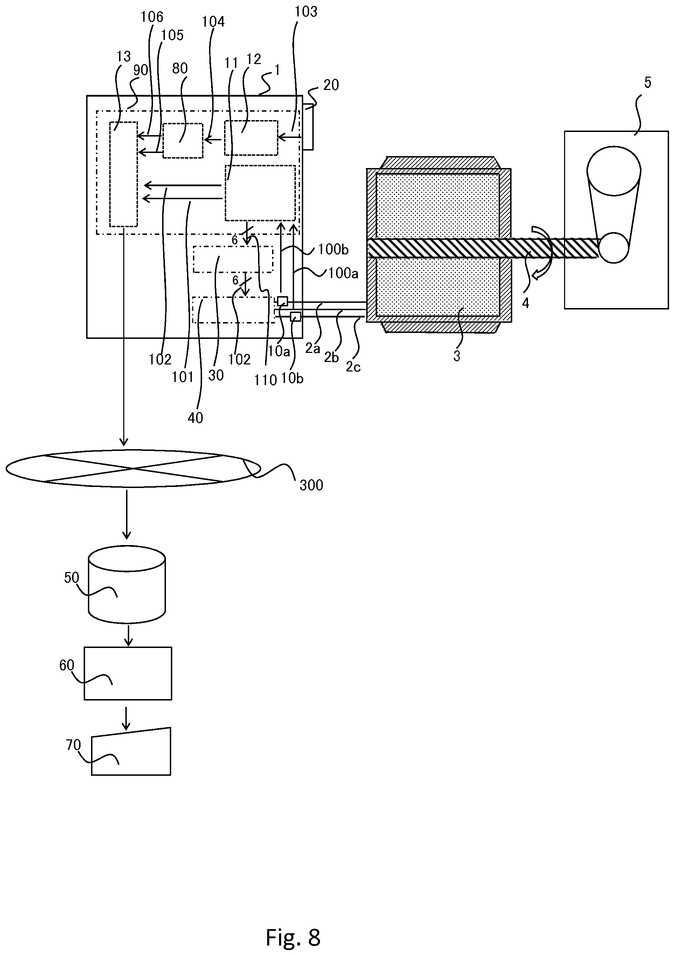

FIG. 8 shows a third embodiment according to the present invention. In the third embodiment, an interface circuit 13 of a power conversion device 1 is connected to a data accumulation means 50 provided in another site via a network 300. By thus connecting the data accumulation means 50 via the network 300, it is possible to keep more data amount, that is, data for a longer period of time than a case where the data accumulation means 50 is provided in the power conversion device 1 as shown in FIG. 1, enabling monitoring for a longer period of time.

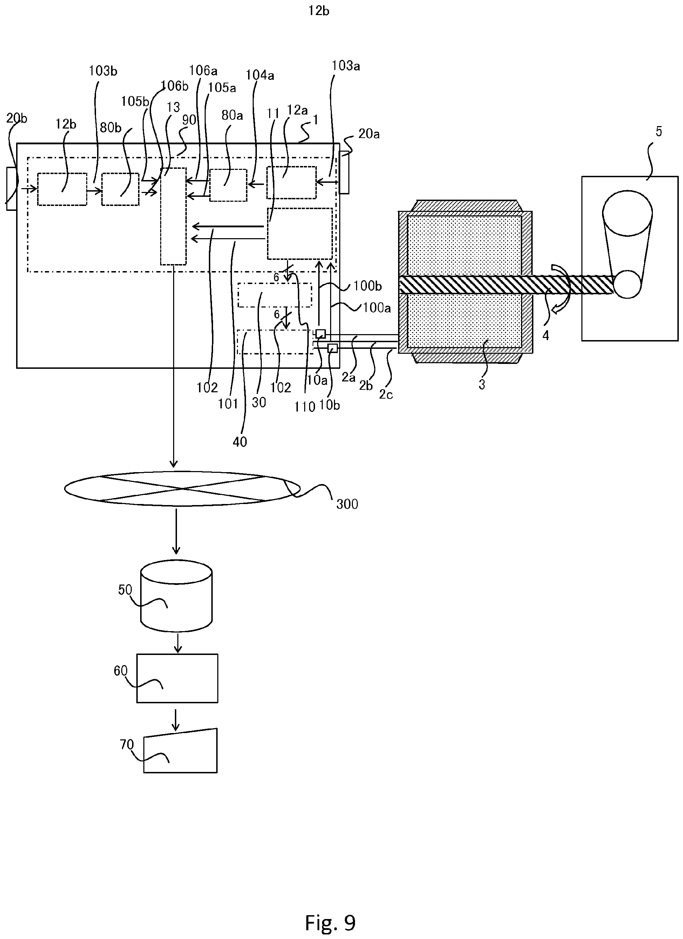

FIG. 9 shows a fourth embodiment according to the present invention. In the present invention, a plurality of acoustic sensors 20a and 20b are provided, signals thereof are converted into digital signals 104a and 103b by analog-to-digital converters (A/D converters) 12a and 12b, respectively, and fast Fourier transform (FFT) converters 80a and 80b are further provided. By having the plurality of acoustic sensors, the position of the abnormal sound can be detected by utilizing the plurality of acoustic sensors when there are a plurality of motors or machines driven by the motors.

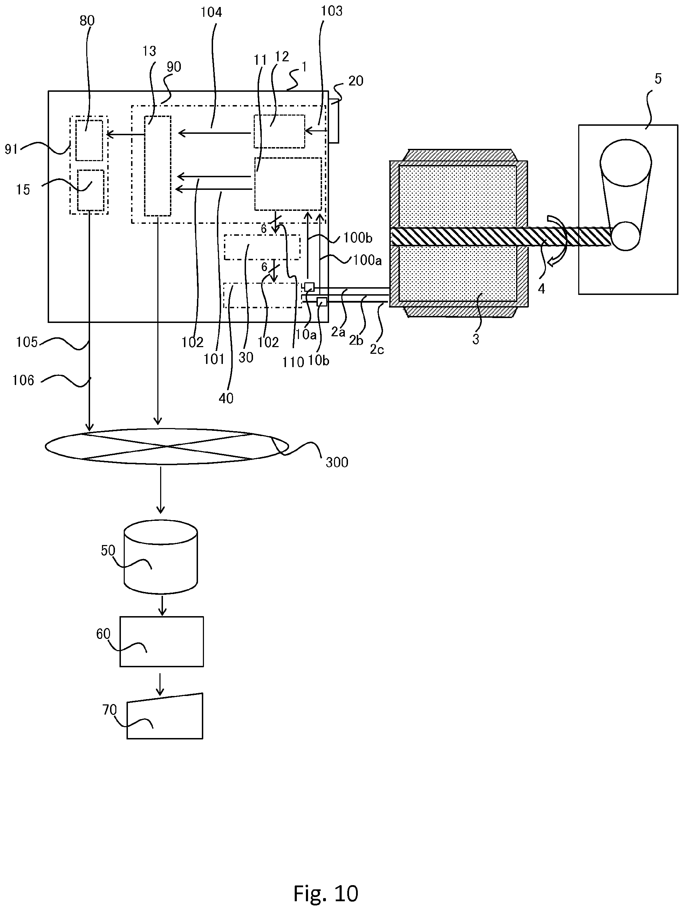

FIG. 10 shows a fifth embodiment according to the present invention. In FIGS. 4 and 9, the analog-to-digital converter (A/D converter) 12 and the fast Fourier transform (FFT) converter 80 utilize a circuit incorporated in the microcomputer 90. However, since the calculation amounts of the A/D conversion and the FFT are large, there is a possibility that the microcomputer 90 cannot process them all. Thus, a microcomputer different from an IGBT driving microcomputer 90 or a field-programmable gate array (FPGA) 91 is provided.

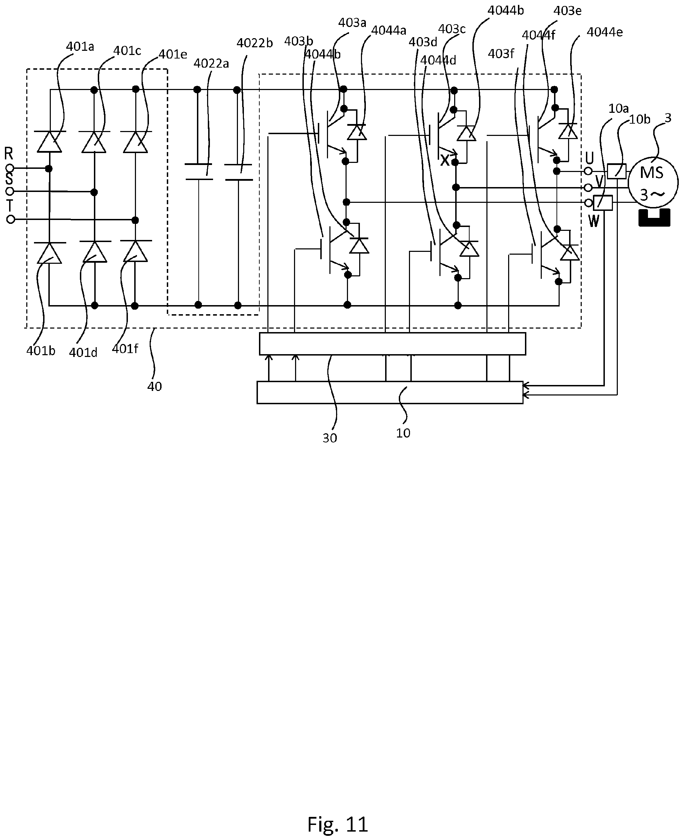

FIG. 11 shows a driving circuit for driving a motor 3. Diodes 401a to 401f constitute a three-phase diode bridge. The anode of the diode 401a and the cathode of 401b are connected to the R phase input of the three-phase. Similarly, the anode of the diode 401c and the cathode of 401d are connected to the S phase input, and the anode of the diode 401e and the cathode of 401f are connected to the T phase input. The alternating current is full-wave rectified by the three-phase diode bridge constituted by the diodes 401a to 401f, the ripple components are removed by smoothing capacitors 4022a and 4022b, and the alternating current becomes a direct current.

The cathodes of diodes 4044a to 4044f are connected to the collectors of IGBTs 403a to 403f, and the anodes of the diodes 4044a to 4044f are connected to the emitters of the IGBTs 403a to f. The collectors of the IGBTs 403a, 403c and 403e are connected to the diodes 401a, 401c and 401d and the smoothing capacitors 4022a and 4022b, and the emitters of the IGBTs 403b, 403d and 403f are connected to the diodes 401b, 401, 401d and 401f and the smoothing capacitors 4022a and 4022b. A gate driving circuit 40 is connected to the gates of the IGBTs 3a to f. The emitter of the IGBT 403a and the collector of the IGBT 403b are connected to the U phase of the motor 3. Similarly, the emitter of the IGBT 403c and the collector of the IGBT 3d are connected to the V phase of the motor 3, and the emitter of the IGBT 403e and the collector of the IGBT 4033f are connected to the W phase of the motor 3.

In FIG. 11, the diodes 401a to 401f, the IGBTs 403a to 403f and the diodes 4044a to 4044f are stored in one module 30. A current sensor 10a is provided for the wiring among the U phase of the motor 5, the emitter of the IGBT 403a and the collector of the IGBT 403b, and a current sensor 10b is provided for the wiring among V phase of the motor 500, the emitter of the IGBT 403e and the collector of the IGBT 403f.

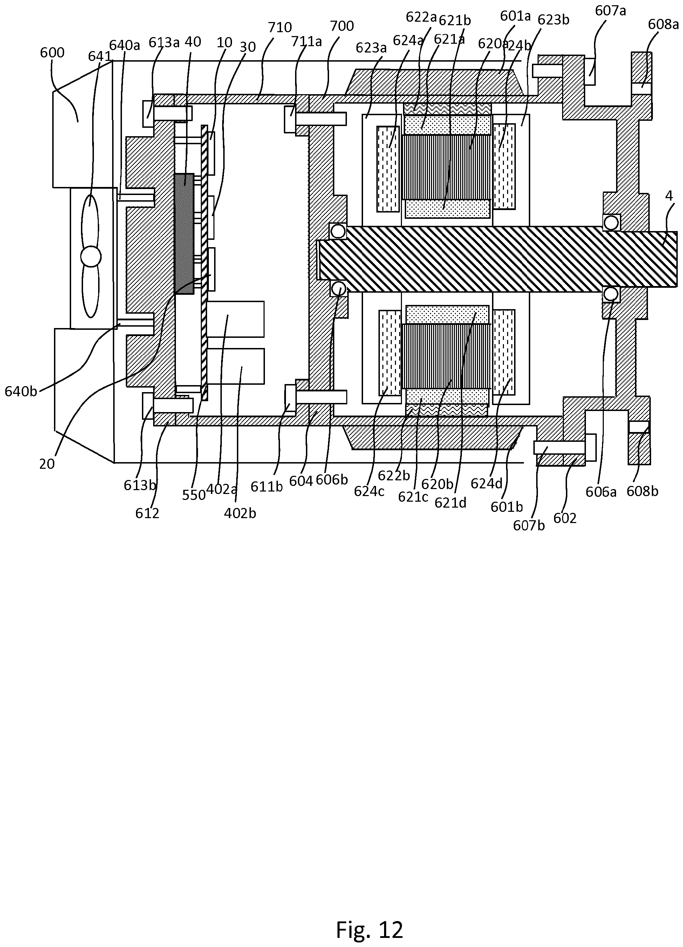

FIG. 12, which is an example not according to the invention, shows wires 621a and 621b which are wound around electromagnetic steel sheets 620a and 620b, and the electromagnetic steel sheets 620a and b and the wires 621a and 621b constitute a stator. Magnets 624a to d are housed in cases 623a and 623b, and the cases 623a and 623b and the magnets 624a to 624d constitute a rotor. The stator and the rotor are housed in a motor housing 700. On the surface of the motor housing 700, motor housing cooling fins 601a and 601b are provided. The motor housing cooling fins 601a and 601b are provided along the circumference of the motor. The cases 623a and 623b and a motor rotating shaft 4 leading to a load are connected. At the motor housing 700 and the left end portion of the motor in FIG. 2, a bearing 606a is provided to support the motor rotating shaft 4. The motor housing 700 is connected to a flange 602 by screws 607a and 607b. The motor rotating shaft 4 is instructed by the bearing 606a connected to the flange 602. The flange 602 is fixed to a mechanical device not shown in the drawing by bolt holes 608a and 608b. On the opposite side (back face of the motor) of the motor rotating shaft 4 of the motor housing 700, an inverter housing 710 is connected to the motor housing 700 by bolts 711a and 611b.

On the back face of the inverter housing 710, a back face cooling fin 612 is connected to the inverter housing 710 by bolts 613a and 613b. The back face cooling fin 612 is provided with a cooling fan 641 through pedestals 640a and 640b. A print 550 is provided on the module 30, and capacitors 402a and 402b, a microcomputer 90, an acoustic sensor 20 and a gate driving circuit 40 are provided. A wind tunnel cover 600 that covers the cooling fan 641, the inverter housing 710, the motor housing 700 and the cooling fin 612 is provided.

In the present invention, since the acoustic sensor 40 is covered with the inverter housing 710 and sounds other than the motor are blocked, only the sound of the motor can be picked, enabling highly accurate measurement and abnormality detection.

### Reference Signs List

- 1: power conversion device (inverter)
- 2a to c: motor line
- 3: motor
- 4: motor rotating shaft
- 5: machine
- 12: analog-to-digital converter (A/D converter)
- 13: interface circuit
- 20: acoustic sensor
- 30: gate driving circuit
- 40: IGBT
- 50: data accumulation means
- 60: abnormality detection device
- 70: external output unit
- 80: fast Fourier transform (FFT) converter
- 90: microcomputer
- 100a, 100b: current sensor signal
- 110: gate driving signal
- 102: IGBT driving signal
- 103: acoustic sensor signal
- 104: digitized acoustic sensor signal
- 105: frequency signal
- 106: sound pressure signal
- 200: driving command
- 201: determination means
- 300: network

## Claims

1. A power conversion device (1) comprising:
an acoustic sensor (20);
an interface unit (13) configured to input a sound pressure signal (106) acquired by the acoustic sensor (20) when a motor (3) is driven, and to receive motor rotation information (101, 102);
an accumulation unit (50) configured to accumulate the sound pressure signal and the motor rotation information (101, 102) from the interface unit;
an abnormality detection unit (60) configured to detect abnormality based on a relationship between the sound pressure signal (106) and the motor rotation information (101, 102); and
an external output unit (70) configured to output the abnormality when the abnormality is detected by the abnormality detection unit (60);
**characterized in that**
the acoustic sensor (20) is provided with a shielding portion (710) that blocks sounds other than a sound of the motor (3).

2. The power conversion device (1) according to claim 1, wherein
torque, as the motor rotation information (101, 102), and the sound pressure signal (106) are accumulated in the accumulation unit, and
the abnormality detection unit (60) is configured to detect, as the abnormality, a change in a relationship between the sound pressure signal (106) and the torque over time.

3. The power conversion device (1) according to claim 1, wherein
a sound frequency signal (105) is generated by a fast Fourier transform (FFT) converter (80) from data acquired by the acoustic sensor (20),
the interface unit (13) is configured to input a motor rotation speed (101) as the motor rotation information (101, 102), and
the abnormality detection unit (60) is configured to detect, as the abnormality, occurrence of a sound in which the sound frequency signal (105) changes as the motor rotation speed (101) change in a relationship between the motor rotation speed (101) and the sound frequency signal (105).

4. The power conversion device according to claim 3, wherein the abnormality detection unit (60) is configured to detect, as the abnormality, periodic occurrence of a sound signal with a specific frequency in a relationship between the sound frequency signal (105) and time.

5. The power conversion device (1) according to any one of claims 1 to 4, wherein the power conversion device (1) is configured to receive signals from the accumulation unit (50), which is provided outside the power conversion device (1), via a network.

6. The power conversion device (1) according to any one of claims 1 to 5, comprising a plurality of acoustic sensors (20) .

7. The power conversion device (1) according to any one of claims 2 to 6, wherein the FFT converter (80) is provided separately from a motor driving microcomputer (90).

## Patentansprüche

1. Leistungswandlervorrichtung (1), die Folgendes umfasst:
einen akustischen Sensor (20);
eine Schnittstelleneinheit (13), die ausgelegt ist, um ein Schalldrucksignal (106), das von dem akustischen Sensor (20) erfasst wird, wenn ein Motor (3) angetrieben wird, einzugeben und Motorrotationsinformationen (101, 102) zu empfangen;
eine Akkumulationseinheit (50), die ausgelegt ist, um das Schalldrucksignal und die Motorrotationsinformationen (101, 102) von der Schnittstelleneinheit zu akkumulieren;
eine Anomaliedetektionseinheit (60), die ausgelegt ist, um basierend auf einer Beziehung zwischen dem Schalldrucksignal (106) und den Motorrotationsinformationen (101, 102) eine Anomalie zu detektieren; und
eine externe Ausgabeeinheit (70), die ausgelegt ist, um die Anomalie auszugeben, wenn die Anomalie durch die Anomaliedetektionseinheit (60) detektiert wird;
**dadurch gekennzeichnet, dass**
der akustische Sensor (20) mit einem Abschirmabschnitt (710) bereitgestellt ist, der anderen Schall als einen Schall des Motors (3) blockiert.

2. Leistungswandlervorrichtung (1) nach Anspruch 1, wobei das Drehmoment als die Motorrotationsinformationen (101, 102) und das Schalldrucksignal (106) in der Akkumulationseinheit akkumuliert sind und die Anomaliedetektionseinheit (60) ausgelegt ist, um als die Anomalie eine Änderung einer Beziehung zwischen dem Schalldrucksignal (106) und dem Drehmoment über der Zeit zu detektieren.

3. Leistungswandlervorrichtung (1) nach Anspruch 1, wobei
aus von dem akustischen Sensor (20) erfassten Daten ein Schallfrequenzsignal (105) durch einen Schnelle-Fourier-Transformations-(FFT-)Wandler (80) erzeugt wird,
die Schnittstelleneinheit (13) ausgelegt ist, um eine Motordrehzahl (101) als die Motorrotationsinformationen (101, 102) einzugeben, und
die Anomaliedetektionseinheit (60) ausgelegt ist, um als die Anomalie das Auftreten eines Schalls, bei dem sich das Schallfrequenzsignal (105) ändert, wenn sich die Motordrehzahl (101) ändert, in einer Beziehung zwischen der Motordrehzahl (101) und dem Schallfrequenzsignal (105) zu detektieren.

4. Leistungswandlervorrichtung nach Anspruch 3, wobei die Anomaliedetektionseinheit (60) ausgelegt ist, um als die Anomalie ein periodisches Auftreten eines Schallsignals mit einer spezifischen Frequenz in einer Beziehung zwischen dem Schallfrequenzsignal (105) und der Zeit zu detektieren.

5. Leistungswandlervorrichtung (1) nach einem der Ansprüche 1 bis 4, wobei die Leistungswandlervorrichtung (1) ausgelegt ist, um über ein Netzwerk Signale von der Akkumulationseinheit (50), die außerhalb der Leistungswandlervorrichtung (1) bereitgestellt ist, zu empfangen.

6. Leistungswandlervorrichtung (1) nach einem der Ansprüche 1 bis 5, umfassend eine Vielzahl von akustischen Sensoren (20).

7. Leistungswandlervorrichtung (1) nach einem der Ansprüche 2 bis 6, wobei der FFT-Wandler (80) separat von einem Motorantriebsmikrocomputer (90) bereitgestellt ist.

## Revendications

1. Dispositif de conversion de puissance (1), comprenant :
un capteur acoustique (20) ;
une unité d'interface (13) configurée pour entrer un signal de pression sonore (106) acquis par le capteur acoustique (20) lorsqu'un moteur (3) est entraîné, et pour recevoir des informations de rotation de moteur (101, 102) ;
une unité d'accumulation (50) configurée pour accumuler le signal de pression sonore et les informations de rotation de moteur (101, 102) à partir de l'unité d'interface ;
une unité de détection d'anomalie (60) configurée pour détecter une anomalie sur la base d'une relation entre le signal de pression sonore (106) et les informations de rotation de moteur (101, 102) ; et
une unité de sortie externe (70) configurée pour délivrer en sortie l'anomalie lorsque l'anomalie est détectée par l'unité de détection d'anomalie (60) ;
**caractérisé en ce que** le capteur acoustique (20) est pourvu d'une partie de blindage (710) qui bloque des sons autres qu'un son du moteur (3).

2. Dispositif de conversion de puissance (1) selon la revendication 1, dans lequel
un couple, en tant qu'informations de rotation de moteur (101, 102), et le signal de pression sonore (106) sont accumulés dans l'unité d'accumulation, et
l'unité de détection d'anomalie (60) est configurée pour détecter, en tant qu'anomalie, un changement dans une relation entre le signal de pression sonore et le couple au fil du temps.

3. Dispositif de conversion de puissance selon la revendication 1, dans lequel
un signal de fréquence sonore (105) est généré par un convertisseur (80) à transformée de Fourier rapide (FFT) à partir de données acquises par le capteur acoustique (20),
l'unité d'interface (13) est configurée pour entrer une vitesse de rotation de moteur (101) en tant qu'information de rotation de moteur (101, 102), et
l'unité de détection d'anomalie (60) est configurée pour détecter, en tant qu'anomalie, une occurrence d'un son dans lequel le signal de fréquence sonore (105) change lorsque la vitesse de rotation de moteur (101) change dans une relation entre la vitesse de rotation de moteur (101) et le signal de fréquence sonore (105).

4. Dispositif de conversion de puissance selon la revendication 3, dans lequel l'unité de détection d'anomalie (60) est configurée pour détecter, en tant qu'anomalie, une occurrence périodique d'un signal sonore avec une fréquence spécifique dans une relation entre le signal de fréquence sonore (105) et le temps.

5. Dispositif de conversion de puissance (1) selon l'une quelconque des revendications 1 à 4, dans lequel le dispositif de conversion de puissance (1) est configuré pour recevoir des signaux à partir de l'unité d'accumulation (50), qui est fournie à l'extérieur du dispositif de conversion de puissance (1) via un réseau.

6. Dispositif de conversion de puissance selon l'une quelconque des revendications 1 à 5, comprenant une pluralité de capteurs acoustiques (20).

7. Dispositif de conversion de puissance (1) selon l'une quelconque des revendications 2 à 6, dans lequel le convertisseur FFT (80) est prévu séparément d'un microordinateur d'entraînement de moteur (90).
